# EUROPÄISCHE PATENTSCHRIFT

(11) **EP 1 566 073 B1**
(45) Veröffentlichungstag und Bekanntmachung des Hinweises auf die Patenterteilung: **15.03.2006**
(21) Anmeldenummer: 03775376.1
(22) Anmeldetag: 20.11.2003
(51) Int. Cl.: H04R 1/30, H04R 1/28, H04R 1/02

(54) **AKUSTISCHE SCHALLFÜHRUNG IM FAHRZEUG**
ACOUSTIC WAVE GUIDANCE IN A VEHICLE
GUIDAGE D'ONDES ACOUSTIQUES DANS UN VEHICULE

(30) Priorität: 28.11.2002 DE 10255794
(43) Veröffentlichungstag der Anmeldung: 24.08.2005
(73) Patentinhaber: DaimlerChrysler AG, 70567 Stuttgart (DE)
(72) Erfinder: HOFMANN, Marcus, 70327 Stuttgart (DE); LINHARD, Klaus, 89601 Schelklingen (DE)
(86) Internationale Anmeldenummer: PCT/EP2003/012989
(87) Internationale Veröffentlichungsnummer: WO 2004/049755

(56) Entgegenhaltungen:
- EP-A- 0 334 238
- EP-A- 1 077 156
- DE-C- 10 106 355
- US-A- 3 892 288
- US-A- 4 799 264
- US-A- 5 170 435

## Beschreibung

Die Erfindung betrifft eine akustische Vorrichtung zur Erzeugung von Audiosignalen nach den Merkmalen des Oberbegriffs des Patentanspruchs 1.

Die Audio-Beschallung im heutigen Fahrzeugen soll auf jedem Sitzplatz eine gleich hohe Qualität gewährleisten. Es ist das Ziel dass alle Insassen praktisch das gleiche Audio-Signal in gleicher Qualität und mit gleicher Lautstärke hören; in aufwendigen Systemen auch mit Stereo- oder Sourround Effekt. In der Regel kann bei heutigen kommerziellen Geräten jedoch nur die Lautstärke grob ausbalanciert werden, zwischen "rechts" und "links" und zwischen "vorne" und "hinten". Eine feinere Lautstärkeeinstellung für jeden Sitzplatz ist nicht möglich. Es sind Techniken bekannt die auf die Trennung der Audio-Ausgabe abzielen um damit räumlich benachbarten Personen ganz unterschiedliche Audio-Programme darbieten zu können. So beschreibt beispielsweise die WO 01/08449 A1 ein Verfahren zur Wiedergabe von Audioschall mit Ultraschall-Lautsprechern, bei welchem das wiederzugebende Audiosignal durch eine Amplitudenmodulation mit einem Trägersignal im Ultraschall-Frequenzbereich verknüpft wird. Solche Techniken dienen der Schallbündelung mit Hilfe eines modulierten Ultraschallsignals. Der hörbare Audioschall wird hierbei entlang des mit sehr hohem Pegel abgestrahlten Ultraschallbündels durch die Nichtlinearität der Luft erzeugt und scharf bündelnd aufaddiert.

Eine Möglichkeit der Audio-Erzeugung direkt in der Kopfstütze eines Fahrzeugsitzes wird beispielsweise in der Patentanmeldung EP 1 077 156 A1 aufgezeigt. Dabei ist der Lautsprecher in der Kopfstütze integriert. Der Schallaustritt erfolgt durch einen integrierten, in Form eines Horns ausgeführten Resonator der sich dem Lautsprecher anschließt. Eine weitere Möglichkeit der Audio-Erzeugung in der Kopfstütze mit Richtwirkung wird in der Schrift EP 1 077 583 A2 beschrieben. Die Richtwirkung wird hierbei dadurch erzeugt, dass der in Richtung der Rückseite der Kopfstütze ausgesandte Schall des in die Kopfstütze integrierten Lautsprechers mit ausgenutzt wird. Der generelle Nutzen einer Audio-Beschallung als Nahfeld im Kopfbereich ist, dass die Person in unmittelbarer Nähe gut beschallt wird und etwas weiter entfernte Personen mit deutlich reduzierter Lautstärke beschallt werden. Zusätzlich ergibt sich durch die Beschallung an der Kopfstütze eine gute Möglichkeit räumliche Audio-Effekte wie z.B. Stereo zu erzielen. Nachteilig an diesen Anordnungen, bei welchen sich der Lautsprecher des akustischen Systems direkt in der Kopfstütze befindet, ist vor allem die reduzierte. Unfallsicherheit, da in der ansonsten weichen Kopfstütze relativ große harte Gegenstände integriert sind, welche zu Kopfverletzungen führen könnten. Des weiteren werden durch die Integration verhältnismäßig großvolumiger Lautsprecher die optischen Gestaltungsmöglichkeiten der Kopfstütze stark eingeschränkt.

Die Schrift JP 04 172 795 A beschreibt eine akustische Vorrichtung, bei welcher der Schallwandler und der Schallaustrittsort räumlich voneinander getrennt sind. Hierbei wird der Schall zwischen Schallwandler und Schallaustrittsort durch eine rohrförmige Schallleitung geführt. Zur akustischen Impedanzanpassung der Luft innerhalb der Schallleitung an die Umgebung wird ein hornförmiger Leitungsabschluss vorgeschlagen. Dabei wird der Leitungsabschluss zur Dämpfung von Reflektionen vorzugsweise durch eine geeignete Ausformung von schallabsorbierendem Material geschaffen. Das Patent DE 689 19 495 T2 beschreibt ein ähnliches System mit Schallleitung zwischen Schallwandler und Schallaustrittsort, wobei hierbei die akustische Impedanzanpassung durch die Anbringung von Ringgliedern an der Schallaustrittsöffnung geleistet wird. Dabei weist das Material, aus welchem diese Ringglieder gefertigt werden, eine der Luft entsprechende Permeabilität auf. Hierbei führt der zusätzliche Auftrag der Ringglieder jedoch zu einer Vergrößerung der Abmaße der Austrittsöffnungen der Schallleitung.

Aufgabe der Erfindung ist es, ein akustische Vorrichtung zu schaffen, welche zum einen in der Nähe ihres Schallaustrittsortes keine großvolumigen harten Bauelemente aufweist und zum anderen eine möglichst gute Anpassung der akustischen Impedanz zwischen der von einem Schallwandler erzeugten Luftsäule und der Umgebungsluft aufweist.

Die Aufgabe wird durch eine Vorrichtung mit den Merkmalen des Patentanspruchs 1 gelöst. Weitere vorteilhafte Weiterbildungen und Ausgestaltungen der Erfindung sind in den Unteransprüchen beschrieben.

Die Lösung der Aufgabe besteht in der erfinderischen Ausgestaltung einer akustische Vorrichtung zur Erzeugung von Audiosignalen, bei welcher der Schallwandler und wenigstens eine Schallaustrittsort räumlich voneinander getrennt sind. Solche Vorrichtungen verfügen über eine luftführende Schallleitung der mit dem Schallaustrittsort in Verbindung steht, und bei der ein Mittel vorgesehen ist, um eine akustische Impedanzanpassung der Luft in der Schallleitung und der Umgebungsluft zu erreichen, um Resonanzeffekte zu vermindern. Das Mittel zur akustischen Impendanzanpassung besteht dabei aus einem Material, welches die akustische Impedanz von Luft aufweist. In erfinderischer Weise wird nun dieses Material flächig und schlüssig über der wenigstens einen Schallaustrittsöffnung angebracht. Hierdurch wird gewinnbringend eine akustische Impedanzanpassung erreicht, welche nicht nur den kleinst möglichen Bauraum benötigt, sonder welche zugleich auch Schutz gegen Schmutzeintrag in die Vorrichtung bietet.

In besonders vorteilhafter Weise besteht das die akustische Impedanz von Luft aufweisenden Material, aus einem fasrigen und/oder porösen Material, insbesondere aus Filz, Schwammmaterial, ungewebten Stoff oder Felt-Metall. Da die akustische Impedanz von Luft bei 41,4 Rayl liegt, sollte das zum Abschluss der Schallleitung dienende Material ebenfalls einen Rayl-Wert in dieser Größenordnung aufweisen. Im Handel sind beispielsweise als Feltmetal bezeichnete Materialen mit entsprechenden Raylwerten problemlos erhältlich. Der Verschluss der Rohrendes mit Material, welches einen Wert von etwa 40 Rayl aufweist, simuliert ein unendlich langes Rohr und führt hierdurch zu einem idealen resonanzfreien Schallaustritt.
In besonders vorteilhafter Weise sollte die Dicke des verwendeten Felt-Metalls in der Größenordnung von 1 mm liegen, so dass zum einen ausreichende Stoß- und Druckfestigkeit zum anderen eine möglichst geringe Dämpfung der zu übertragenden Schallwellen geben ist.

Nachfolgend wir die Erfindung anhand von Ausführungsbeispielen und Figuren im Detail beschrieben.

Figur 1 zeigt die innerhalb eines Kraftfahrzeugs vorhandenen Einflüsse auf die Ausbreitung akustischer Schallwellen auf.

Figur 2 zeigt einen Laboraufbau einer erfindungsgemäßen akustischen Vorrichtung.

Figur 3 stellt das mittels des in Figur 2 abgebildeten Laboraufbaus gemessenen Frequenzspektrum dar.

Figur 4 zeigt beispielhaft einen Schallwandler in Form eines isobarischen Push/Pull-Systems.

Figur 5 skizziert eine alternative Bauform eines isobarischen Push/Pull-Systems.

Figur 6 zeigt einen Laboraufbau zur Ermittlung der Richtwirkung einer akustischen Vorrichtung dessen Schallwandler auf Basis eines Push/Pull-Systems arbeitet.

Figur 7 stellt das mittels des in Figur 6 abgebildeten Laboraufbaus gemessene Frequenzspektrum dar.

Figur 8 zeigt beispielhaft eine erfindungsgemäße Kopfstütze mit Schallführung durch die Haltestangen.

Figur 9 zeigt beispielhaft eine Kopfstütze, bei welchem durch geeignete Ausführung der Schallführung eine Richtwirkung des abgestrahlten Schalls auftritt.

Figur 10 zeigt beispielhaft eine Kopfstütze bei der die Schallaustrittsorte der erfindungsgemäßen Vorrichtung zu einem Flächenstrahler angeordnet sind.

Figur 11 zeigt beispielhaft eine Kopfstütze, bei welcher eine Richtwirkung des austretenden Schalls, sowohl durch gegenphasige Auslöschung, als auch durch Anordnung der Schallaustrittsorte zu einem Flächenlautsprechen, erzielt wird.

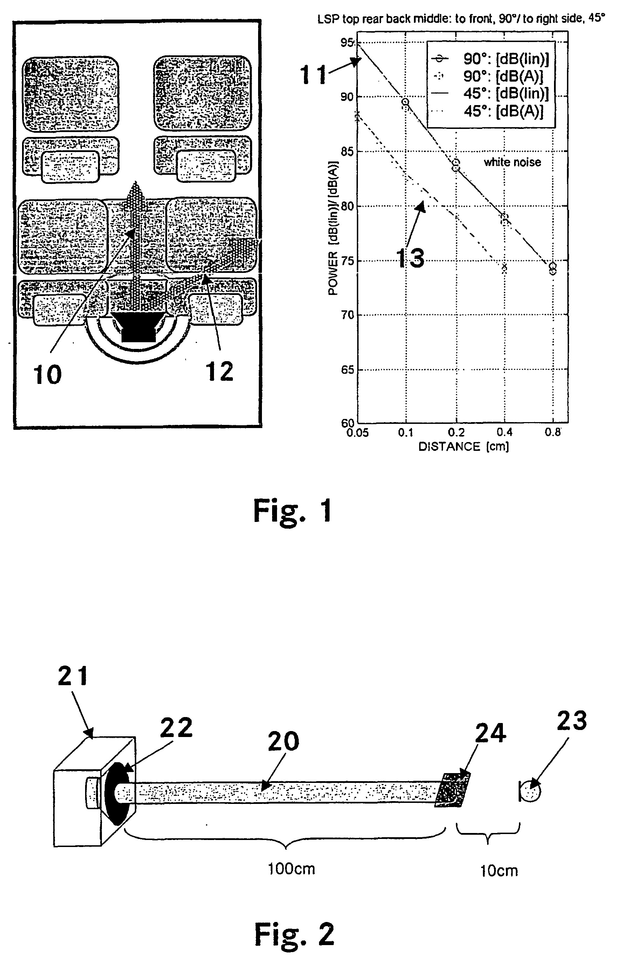

Figur 1a) zeigt schematisch den Innenraum eines Kraftfahrzeugs mit zwei einzelnen Sitzen, Fahrer- und Beifahrersitzen, und einer Sitzbank im Fond. Innerhalb eines solchen typischen Fahrzeuginnenraumes wurde die Ausbreitung des von einem in der Mitte oberhalb der Rückenlehne der Sitzbank abgestrahlten Lautsprechersignals gemessen. Figur 1b) zeigt den Leistungabfall des Lautsprechersignals in Abhängigkeit der Entfernung. Hierbei zeigt Kurve 11 den Leistungsabfall in Richtung 10 des Fahrer und Beifahrersitzes und die Kurve 13 den Leistungsabfall in Richtung 12 der Passagiere auf der Rückbank unter einem Winkel von 45° vom Lautsprecher. Es zeigt sich deutlich, dass die Schalleistung bei jeder Verdopplung des Abstandes um 6 dB abfällt. Das gilt für den unbewerteten Pegel und für die A-Bewertung (Die A-Bewertung berücksichtigt in grober Näherung die subjektive Hörempfindung). Der 6dB-Wert ist der korrekte Wert, sofern wir uns im direkten Schallfeld der Quellen befinden. Das ist im Fahrzeug bis zu dem gemessenen Abstand von 80 cm näherungsweise erfüllt. Ein ideales diffuses Schallfeld (z.B. durch sehr viele Reflektionen) hätte keine Ortsabhängigkeit. Da wir im Fahrzeug diesen 6dB-Wert erreichen ist es sinnvoll die Schallquelle direkt beim Nutzer, also seiner Kopfstütze zu platzieren, damit die weiteren Insassen, bedingt durch größere Abstände nur noch wenig Schall mithören können. Beispielsweise hat der Nutzer einen Abstand zur Schallquelle von 5cm und der nächste Mithörer aber einen Abstand von 40cm. Damit ist für den Mithörer die Schallleistung um 18dB geringer. Wesentlich bei der Erfindung ist, dass sich die Absenkung des Mithörens durch die Abstandabhängigkeit im direkten, nahen Schallfeld ergibt.

Abbildung 2 zeigt den Laboraufbau einer Anordnung bestehend aus einem Druckkammerlautsprecher und einem daran angeschlossenen dünnwandigem Kunststoffrohr. Das Kunststoffrohr 20 hat einen Innendurchmesser von 15mm und ist 1 Meter lang. Der im Laborsystem eingesetzte Lautsprecher 21 ist ein Messlautsprecher der Firma B&K. Der Druckkammerlautsprecher besteht hierbei aus einem Lautsprecherchassis in einem kleinen druckfestem Gehäuse. Das Luftvolumen an der Membranvorderseite 22 des Lautsprechers bis zum Rohansatz ist sehr gering. In ca. 10cm Abstand senkrecht vor der Rohröffnung wurde ein Messmikrofon 23 platziert. Diese Anordnung wurde zur Durchführung von Messungen in einem akustisch gedämpften Raum aufgebaut.

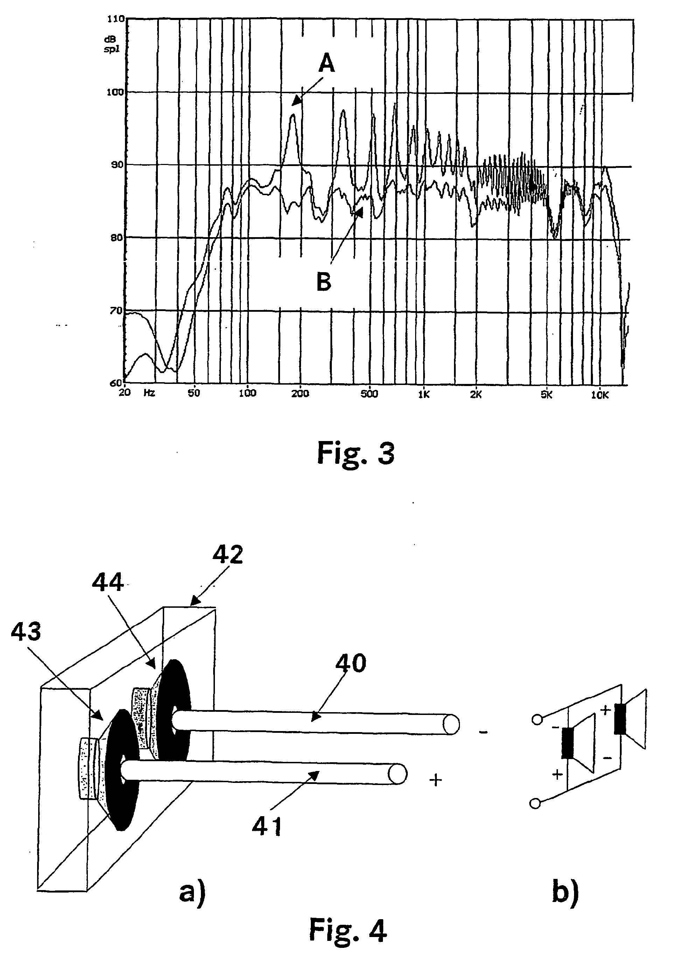

Figur 3 zeigt zwei Frequenzgangmessungen die mittels des in Figur 2 abgebildeten Laboraufbaus durchgeführt wurden.

Die Kurve A repräsentiert hierbei die Messkurve wie sie aus dem Betrieb des Aufbaus ohne Abdeckung der Schallleitung herrührt. Kurve A zeigt deutliche Resonanzen bei 170, 340, 510, 680, .... Hz. Die Resonanzen entstehen bei den Frequenzen, an denen die Wellenlänge die 2-fache Rohrlänge (und ganzzahlige Bruchteile davon) beträgt.

Die Kurve B beschreibt das Frequenzverhalten des Aufbaus bei erfindungsgemäßem Abschluss der Schallleitung mit einem Felt-Metall 24 mit 35 Rayl. Hierbei wird deutlich, dass die Resonanzen um ca. 10dB reduziert sind und somit näherungsweise ein gerader (linearer) Frequenzgang entsteht.

In den nachfolgenden Ausführungen wird aufgezeigt, wie mit einem akustisch geführten Lautsprechersystem Richtwirkung erzeugt wird. Hierbei zeigt Abbildung 4a) schematisch einen Schallwandler bestehend aus 2 Rohren 40 und 41, einem Gehäuse 42 und zwei identischen Lautsprecherchassis 43 und 44. Der Einbau der beiden Chassis 43 und 44 in das Gehäuse 42 entspricht einem isobarischen Push/Pull System. Die Push/Pull Funktion wird dadurch erreicht, dass die beiden Chassis elektrisch gegenphasig angeschlossen sind, sodass die Membranbewegungen gegenläufig sind. Das Luftvolumen zwischen der Membranvorderseite und dem Rohansatz ist sehr gering. In der Box herrscht praktisch immer der gleiche konstante Druck und in den Rohren ein pendelnder gegenphasiger Druck. Diese Anordnung ergibt praktisch einen Dipol-Lautsprecher, wobei zwei gegenphasige punktförmige Schallquellen die Öffnungen der beiden Rohre darstellen. In Figur 4b) ist das die Ansteuerung der beiden Lautsprecherchassis 43 und 44 beschreibende elektrische Ersatzschaltbild aufgezeigt. Um Resonanzeffekte durch die Rohre zu vermeiden, können die Rohrenden wieder mit einen akustischen Material mit einem Wert von ca. 40Ray1 abgeschlossen werden.

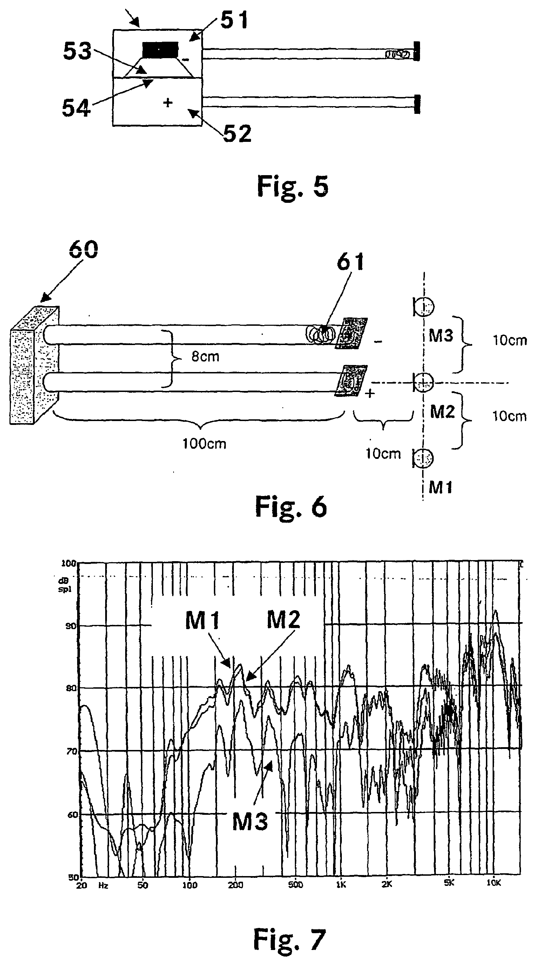

Figur 5 skizziert eine alternative Bauform 50 eines isobarischen Push/Pull-Systems, welches den Vorteil aufweist, dass es die Dipolcharakteristik eines einzelnen Lautsprecherchassis 50 ausnutzt. Hierbei ist das Lautsprechergehäuse in zwei Kammern 51 und 52 unterteilt, denen jeweils der Membranforderseite 53 und bzw. der Membranrückseite 54 zugeordnet sind. Damit ergibt sich in beiden Kammern stets ein gegenphasiger Druck, den wir mit "+" und "-" unterscheiden. Im Vergleich zum isobarischen Push/Pull System von Figur 4 ist die Konstruktion hierbei einfacher und es wird nur ein einziges Lautsperrchassis benötigt. Die Einstellung gleicher akustischer Bedingungen an den Rohrenden kann hierbei jedoch schwieriger sein, da das Lautsprecherchassis selbst unsymmetrisch ist und damit am Rohranfang unter Umständen akustisch unterschiedliche Verhältnisse vorliegen können.

Figur 6 zeigt schematisch den Laboraufbau zur Vermessung eines isobarischen Push/Pull Systems 60 mit akustischem Abschluss der Rohrenden. Eines der Rohre enthält am Ende zusätzlich Dämmmaterial 61, um den aus diesem Rohr austretenden Schall breitbandig zu reduzieren. Durch fasriges Dämmmaterial wurde in dem vorliegenden Beispiel der Schallaustritt um ca. 3dB breitbandig reduziert. Es sind 3 Messmikrofone M1, M2 und M3 angeordnet, mit denen die Richtwirkung der Anordnung gemessen werden soll. Mit "+" soll die Nutz-Schallquelle bezeichnet werden, "-" bezeichnet die gegenphasige Kompensations-Schallquelle. Die dabei verwendeten Lautsprecherchassis sind einfache Systeme die für preiswerte Produkte, wie z.B. Fernsehgeräte, eingesetzt werden. Das Gehäuse wurde nicht akustisch optimiert. Mit diesem System kann beispielhaft die breitbandige Richtwirkung gezeigt werden.

In Figur 7 werden die Frequenzgänge mit den Mikrofonen M1, M2 und M3 aufgezeigt. Es ergibt sich für M1 und M2 im Bereich von 70Hz bis 2kHz ein fast deckungsgleicher Frequenzgang. Der räumliche Bereich um M1 und M2 ist der Nutzbereich, hier sollte sich das Ohr des Hörers befinden. M3 ist hier der Nachbarbereich der möglich wenig beschallt werden soll. Durch den gegenphasigen um 3dB abgesenkten Schall ergibt sich hier eine teilweise Auslöschung, sodass breitbandig 10dB weniger Schall vorhanden ist. Der Nachbarbereich, der in welchen das akustische Signal möglichst wenig übertragen werden soll, wurde im obigen Beispiel durch die Wahl der Bedämpfung von 3dB mit einem Dämmmaterial 61 eingestellt. Soll der Nachbarbereich in einer größeren Entfernung zum Nutzbereich liegen ist dies durch 2 Maßnahmen einstellbar. Die räumliche Entfernung der Rohröffnungen (im obigen Beispiel 8cm) wird vergrößert oder der 3dB Dämpfungswert wird verringert, beispielsweise auf 1 bis 2dB. Die in Figur 7 aufgezeigten Messergebnisse sind selbstverständlich nur beispielhaft und es selbstverständlich, dass durch geeignete akustische Optimierung des von den Schallwandlern ausgesandten Signals mit der selben akustischen Vorrichtung ein noch gleichmäßigerer Frequenzverlauf, sowie eine größere Bandbreite erzielbar sind. Bei einem Rohsystem ergibt sich neben einer Frequenzselektion durch eine übliche Frequenzweiche, die Möglichkeit durch Dämmmaterialien in Rohr und verschiedene Rohdurchmesser den übertragenen Frequenzanteil zu beeinflussen.

Durch Einstellung des Dämpfungswerts und des Abstandes der Rohrenden ist für den jeweiligen Anwendungsfall experimentell zu optimieren. Soll z.B. im einem PKW das Mithören von der Kopfstütze des Fahrers zum Beifahrers reduziert werden, so wird sich der Nachbereich etwa 50cm vom Nutzbereich entfernt sein. Die exakte Bestimmung des Dämpfungswertes und der Rohrentfernung hängt auch von der Konstruktion der Kopfstütze ab. Es empfiehlt sich die experimentelle Optimierung im Fahrzeug.

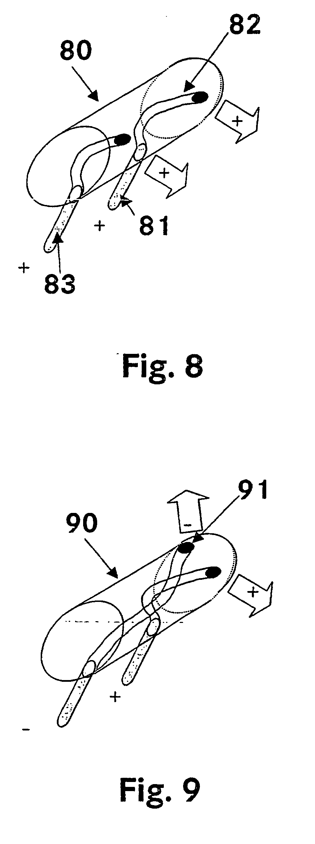

Figur 8 zeigt ein Beispiel für eine akustische Kopfstütze 80 mit Schallführung. Durch die Haltestütze 81 wird der Schall in die Kopfstütze geführt. Die Haltestütze 81 ist als Rohr ausgeführt, vom Ende der Haltestütze 81 führt ein weiteres Rohrelement 82 schließlich zu der Öffnung. Die Öffnungen sind in unmittelbarer Nähe der Ohren des Hörers. Es ist besonders gewinnbringend wenn entsprechend auch die zweite Haltestütze 83 der Kopfstütze als rohrförmiger Schallleiter mit weiteren Rohrelementen ausgeführt wird. Beide Rohrsysteme können dann entweder gleiche Signal aus einem Lautsprechersystem erhalten oder auch verschiednen Signale um beispielweise Stereophonie zu erzeugen. Als Schallwandler kann bei einem solchen System beispielsweise ein Druckkammersystem verwendet werden.

Abbildung 9 zeigt eine akustische Kopfstütze 90, wobei auf der Rückseite der Kopfstütze eine öffnung 91 für das gegenphasige Signal vorhanden ist. Gezeigt ist hier nur die Anordnung für eine Seite der Kopfstütze, also nur für ein Ohr. Das Ohr des Hörers soll von dem mit "+" bezeichneten Schall erreicht werden. In die seitliche Richtung oder nach hinten soll für die Mithörer eine teilweise Kompensation mit dem "-" Schall erfolgen. Es ist vorteilhaft die Rohrlängen für den "+" und "-" Schall gleich lang zu wählen, um möglich gleichartige Frequenzgänge zu erhalten. Als Lautsprecher kann hierbei vorteilhaft ein isobarisches Push/Pull-System verwendet werden.

Eine Alternative zur Erzeugung von Richtwirkung ist mehrere Rohre mit dem gleichen Schallanteil zu verwenden und die Öffnungen dieser Rohre in einer Fläche anzuordnen. Diese Fläche enthält so gewissermaßen viele akustische Punktquellen. Die Quellen in der Fläche simulieren eine große abstrahlende Fläche. Abstrahlende Flächen zeigen eine deutliche Richtwirkung, wenn die Ausdehnung der Fläche die Größenordung der akustischen Wellenlänge erreicht. Ist die Ausdehnung der Fläche größer als die Wellenlänge, sind die Laufzeitunterschiede der Quellen groß, und damit ist die resultierende Richtwirkung besonders stark.

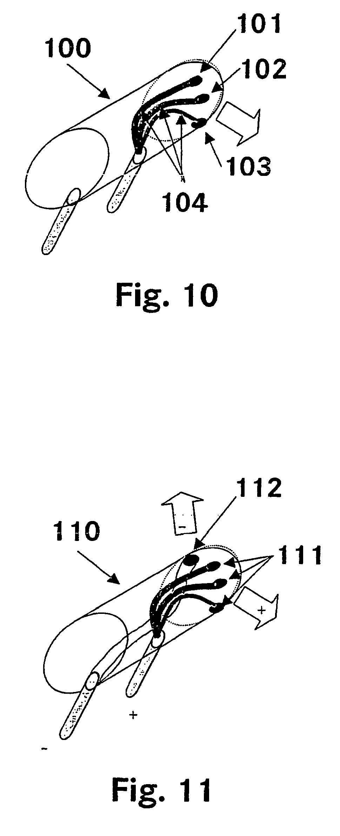

Abbildung 10 zeigt ein einfaches Beispiel einer Kopfstütze 100, wobei 3 Rohrenden 101, 102 und 103 zur Schallerzeugung und Richtwirkung beitragen. Vorteilhaft ist die gleiche Länge der verwendeten Rohrleitungen 101, 102 und 103, um gleiche akustische Eigenschaften zu erhalten. Es können parallel geführte Rohrleitungen oder eine verzweigte Rohrleitung verwendet werden. Die drei Schallquellen 104 sind in dem in Figur 10 aufgezeigten Beispiel übereinander angeordnet. Die Übereinander-Anordnung von Schallquellen ist durch die Saalbeschallung mit säulenlautsprechen bekannt. Hierdurch wird eine horizontale Richtwirkung der Anordnung erreicht und die Schallabstrahlung zur Decke (und zum Boden) vermindert (horizontale Bündelung).

Werden mehrere Schallquellen in einer Fläche nebeneinander und übereinander angeordnet so wird neben der horizontalen Bündelung auch die vertikale Bündelung erreicht. Im Vergleich zu dem bekannten Säulenlautsprecher ist die möglich Anordnung von Schallquellen an einer Kopfstütze durch die geringe Fläche beschränkt. Z.B. entsprechen 10cm Wellenlänge einer Frequenz von 3,4kHz. Eine deutliche Richtwirkung setzt bei einer Quellenausdehnung von etwa einem viertel der Wellenlänge ein. Eine Quellenausdehnung von 10cm wirkt damit ab Wellenlängen von 40cm (und geringer). 40cm entsprechen grob 1kHz- Für die Anwendung in Kopfstützen mit zur Verfügung stehenden "akustischen" Flächen in der Abmessung von z.B. 10cm x 10cm ist die dargestellte Vorgehensweise mit mehreren Rohröffnungen somit ab ca. 1kHz in Sinne der gesteigerten Richtwirkung wirksam. Die Kombination von Richtwirkung durch mehrere gleichphasige Rohenden und durch die Richtwirkung mit gegenphasigen Rohenden ist möglich.

Figur 11 zeigt beispielhaft eine Kopfstütze 110 welche die Kombination von zwei Richtwirkungsanteilen aufweist. Für mittlere Frequenzen, z.B. ab 1kHz wirken die mehrere Rohrenden 111 auf der Vorderseite der Stütze als Richtstrahler zum Ohr. Auf der Rückseite der Kopfstütze ist ein Rohrende 112 mit gegenphasigen Schall zur Auslöschung von seitlichem und rückwärtigem Schall. Diese seitlich/rückwärtige Löschung ist vorwiegend für Frequenzen unterhalb 1kHz wirksam.

Für hohe Frequenzen, wie z.B. ab 10kHz, ist die Richtwirkung von sehr kleinen üblichen Kolben-Lautsprechern bereits sehr deutlich. Bei 10kHz ist die Wellenlänge ca. 3,4cm. Grob ab einem Viertel Membrandurchmesser, also ab ca. 0,8cm eine deutliche Richtwirkung vorhanden. Somit sind Lautsprecher mit einen Durchmesser in der Größenordnung 1cm als Richtstrahler für hohe Frequenzen geeignet.

Für die akustische Kopfstütze ergeben sich 2 Möglichkeiten Richtwirkung für hohe Frequenzen zu erzielen. Bei Rohrdurchmessern in der Größenordnung 1cm ergeben sich für hohe Frequenzen von selbst eine Richtwirkung. Alternative kann für hohe Frequenzen ein kleiner konventioneller Lautsprecher eingesetzt werden. Die hohen Frequenzen werden dann über diesen kleinen Lautsprecher wiedergegeben. Designeinschränkungen und Verletzungsgefährdung bei einem Unfall sind durch den kleinen Lautsprecher in der Größenordnung 1cm Durchmesser gering. Der Leistungsbedarf ist für hohe Frequenzen deutlich geringer als für mittlere und tiefe Frequenzen, sodass auch für den Leitungsbedarf der kleine Lautsprecher ausreicht.

Durch die Aufteilung in ein Rohrsystem für mittlere und tiefe Frequenzen und für einen kleinen Lautsprecher für hohe Frequenzen ergibt sich eine Mehrwegesystem. Mehrwegesystem sind beim Lautsprecherbau bekannt. Sie erfordern eine sogenannte Frequenzweiche um die einzelnen Chassis mit den für sie vorgesehenen Signalanteilen anzusteuern.

Selbstverständlich beschränkt sich die Verwendung der erfindungsgemäßen akustischen Vorrichtung nicht auf eine Verwendung in einer Kopfstütze sondern kann in gewinnbringender Weise vor allem dort zum Einsatz kommen wo beschränkter Bauraum zur Integration von akustischen Schallquellen vorhanden ist, oder in denen die Integration konventioneller Schallwandler aus Sicherheitsgründen nicht geboten scheint.

## Patentansprüche

1. Akustische Vorrichtung zur Erzeugung von Audiosignalen, mit einem Schallwandler und wenigstens einer luftführenden Schallleitung, wobei der Schallwandler und wenigstens ein Schallaustrittsort räumlich voneinander getrennt sind,
der Schallwandler über die wenigstens eine luftführende Schallleitung mit dem Schallaustrittsort in Verbindung steht,
und bei welcher an dem wenigsten einen Schallaustrittsort ein Mittel vorgesehen ist, um eine akustische Impedanzanpassung der Luft in der Schallleitung und der Umgebungsluft zu erreichen, um Resonanzeffekte zu vermindern,
und das Mittel zur akustischen Impedanzanpassung aus einem Material besteht, welches die akustische Impedanz von Luft aufweist,
**dadurch gekennzeichnet,**
**dass** dieses Material flächig und schlüssig über dem wenigstens einen Schallaustrittsort angebracht ist.

2. Akustische Vorrichtung nach Anspruch 1,
**dadurch gekennzeichnet,**
**dass** es sich bei dem, die akustische Impedanz von Luft aufweisenden Material, um ein fasriges und/oder poröses Material, insbesondere um Filz, Schwammmaterial, ungewebten Stoff oder Felt-Metall, handelt.

3. Akustische Vorrichtung nach einem der vorhergehenden Ansprüche,
**dadurch gekennzeichnet,**
**dass** die Vorrichtung über wenigstens zwei Schallleitungen verfügt,
wobei der gemeinsam aus den Schallleitungen austretende Schall, durch die Gestaltung der Schallleitung und/oder durch die Art und Weise der Einspeisung des Schalls durch den Schallwandler, durch Überlagerung in einer Vorzugsrichtung einen hohen Schallpegel und in einer unterwünschten Richtung einen geringeren Schallpegel aufweist.

4. Akustische Vorrichtung nach Anspruch 3,
**dadurch gekennzeichnet,**
**dass** die Schallaustrittsorte der einzelnen Schallleitungen so zueinander angeordnet sind, dass sich ein Flächenstrahler ausbildet.

5. Akustische Vorrichtung nach Anspruch 4,
**dadurch gekennzeichnet,**
**dass** der Flächenstrahler zusätzlich zu den Schallaustrittsorten der einzelnen Schallleitungen einzelne konventionelle Lautsprecher umfasst.

6. Akustische Anordnung nach Anspruch 5,
**dadurch gekennzeichnet,**
**dass** als konventionelle Lautsprecher kleine Hochtöner verwendet werden, welche zur Abstrahlung der hohen Frequenzen innerhalb des hörbaren Frequenzspektrums geeignet sind.

7. Akustische Vorrichtung nach einem der vorhergehenden Ansprüche,
**dadurch gekennzeichnet,**
**dass** zur Erzeugung einer akustischen Richtwirkung die Schallaustrittsorte sowohl im Sinne eines Flächenlautsprechers angeordnet sind, zum anderen aber auch eine Richtwirkung durch gegenphasige Auslöschung entsteht.

8. Akustische Vorrichtung nach einem der vorhergehenden Ansprüche,
**dadurch gekennzeichnet,**
**dass** als Schallwandler ein isobarisches Push/Pull-System verwendet wird.

9. Akustische Vorrichtung nach einem der vorhergehenden Ansprüche,
**dadurch gekennzeichnet,**
**dass** die Schallaustrittsorte in der Kopfstütze eines Fahrzeugsitzes angebracht sind
und sich die Schallwandler außerhalb der Kopfstütze befinden.

10. Akustische Vorrichtung nach Anspruch 9,
**dadurch gekennzeichnet,**
**dass** die Haltestangen der Kopfstütze zur akustischen Schallleitung verwendet werden.

## Claims

1. Acoustic apparatus for producing audio signals, having a sound transducer and at least one air-guiding sound line, the sound transducer and at least one sound emergence location being physically separate from one another,
the sound transducer being connected to the sound emergence location by means of the at least one air-guiding sound line,
and in which the at least one sound emergence location is provided with a means for achieving acoustic impedance matching for the air in the sound line and the ambient air in order to reduce resonance effects,
and the means for acoustic impedance matching is made of a material which has the acoustic impedance of air,
**characterized**
**in that** this material is placed in two dimensions and conclusively over the at least one sound emergence location.

2. Acoustic apparatus according to Claim 1,
**characterized**
**in that** the material which has the acoustic impedance of air is a fibrous and/or porous material, particularly felt, sponge material, unwoven fabric or felt metal.

3. Acoustic apparatus according to one of the preceding claims,
**characterized**
**in that** the apparatus has at least two sound lines,
where the sound emerging jointly from the sound lines has a high sound level through superimposition in a preferred direction and has a lower sound level in an unwanted direction as a result of the design of the sound line and/or as a result of the manner in which the sound is supplied by the sound transducer.

4. Acoustic apparatus according to Claim 3,
**characterized**
**in that** the sound emergence locations of the individual sound lines are arranged relative to one another such that a flat radiating element is produced.

5. Acoustic apparatus according to Claim 4,
**characterized**
**in that** the flat radiating element comprises individual conventional loudspeakers in addition to the sound emergence locations of the individual sound lines.

6. Acoustic apparatus according to Claim 5,
**characterized**
**in that** the conventional loudspeakers used are small tweeters, which are suitable for radiating the high frequencies within the audible frequency range.

7. Acoustic apparatus according to one of the preceding claims,
**characterized**
**in that** to produce acoustic directivity the sound emergence locations are firstly arranged like a flat panel loudspeaker, but secondly directivity is also obtained through antiphase cancellation.

8. Acoustic apparatus according to one of the preceding claims,
**characterized**
**in that** the sound transducer used is an isobaric push/pull system.

9. Acoustic apparatus according to one of the preceding claims,
**characterized**
**in that** the sound emergence locations are placed in the headrests of a vehicle seat,
and the sound transducers are located outside of the headrests.

10. Acoustic apparatus according to Claim 9,
**characterized**
**in that** the support rods of the headrests are used for acoustic sound transmission.

## Revendications

1. Dispositif acoustique pour générer des signaux audio, comportant un transducteur de son et au moins un conduit de son conduisant l'air, le transducteur de son et au moins un endroit de sortie du son étant séparés l'un de l'autre dans l'espace, le transducteur de son communiquant avec l'endroit de sortie du son par l'intermédiaire d'au moins un conduit de son conduisant l'air et dans lequel il est prévu, à au moins un endroit de sortie du son, un moyen d'obtenir une adaptation de l'impédance acoustique de l'air dans le conduit de son et l'air ambiant, afin de réduire les effets de résonance, et le moyen d'adaptation de l'impédance acoustique étant constitué d'un matériau présentant l'impédance acoustique de l'air, **caractérisé en ce que** ledit matériau est appliqué à plat et de façon terminale sur au moins un endroit de sortie du son.

2. Dispositif acoustique selon la revendication 1, **caractérisé en ce que** le matériau présentant l'impédance acoustique de l'air est un matériau fibreux et/ou poreux, en particulier un feutre, un matériau spongieux, une matière non tissée ou un feutre métallique.

3. Dispositif acoustique selon l'une quelconque des revendications précédentes, **caractérisé en ce que** le dispositif comporte au moins deux conduits de son, le son sortant en commun des conduits de son présentant, de par la conformation du conduit de son et/ou la manière dont le son est alimenté par le transducteur de son, un niveau sonore élevé par superposition dans une direction préférentielle et un niveau sonore plus faible dans une autre direction souhaitée.

4. Dispositif acoustique selon la revendication 3, **caractérisé en ce que** les endroits de sortie du son des conduits de son individuels sont disposés les uns par rapport aux autres de telle sorte qu'un diffuseur plan soit formé.

5. Dispositif acoustique selon la revendication 4, **caractérisé en ce que** le diffuseur plan comporte, en plus des endroits de sortie du son des conduits de son individuels, des haut-parleurs conventionnels individuels.

6. Dispositif acoustique selon la revendication 5, **caractérisé en ce que** de petits tweeters, lesquels conviennent à la diffusion des hautes fréquences au sein de spectre de fréquences audibles, sont utilisés en tant que haut-parleurs conventionnels.

7. Dispositif acoustique selon l'une quelconque des revendications précédentes, **caractérisé en ce que** pour générer un effet directionnel acoustique, non seulement les endroits de sortie du son sont disposés comme dans un haut-parleur plan, mais en plus un effet directionnel est généré par étouffement en opposition de phase.

8. Dispositif acoustique selon l'une quelconque des revendications précédentes, **caractérisé en ce qu'**un système push-pull isobare est utilisé en tant que transducteur de son.

9. Dispositif acoustique selon l'une quelconque des revendications précédentes, **caractérisé en ce que** les endroits de sortie du son sont installés dans l'appui-tête d'un siège de véhicule et **en ce que** le transducteur de son se trouve en dehors de l'appui-tête.

10. Dispositif acoustique selon la revendication 9, **caractérisé en ce que** les tiges de retenue de l'appui-tête sont utilisées en tant que conduits acoustiques de son.
